Europäisches Patentamt

(19) European Patent Office

Office européen des brevets

(11) Veröffentlichungsnummer: **0 267 490 B1**

(12) **EUROPÄISCHE PATENTSCHRIFT**

(45) Veröffentlichungstag der Patentschrift:
**20.12.89**

(21) Anmeldenummer: **87115756.6**

(22) Anmeldetag: **27.10.87**

(51) Int. Cl.⁴: **B29C 67/22**, B29D 31/00
// (B29K75/00, B29L31:58)

(54) Verfahren zum Herstellen von Formteilen, insbesondere Polstern, aus mindestens zwei Schaumstoffe, insbesondere Polyurethan-Schaumstoffe, unterschiedlicher Elastizität bzw. Härte bildenden, fliessfähigen Reaktionsgemischen und Anwendung dieses Verfahrens für die Herstellung von Fahrzeugsitzpolstern mit seitlichen Wangen.. 400j 000

(30) Priorität: **08.11.86  DE 3638205**

(43) Veröffentlichungstag der Anmeldung:
**18.05.88 Patentblatt 88/20**

(45) Bekanntmachung des Hinweises auf die Patenterteilung:
**20.12.89 Patentblatt 89/51**

(84) Benannte Vertragsstaaten:
**BE DE ES FR GB IT NL SE**

(56) Entgegenhaltungen:
**DD-A- 113 475
DE-A- 2 523 527
US-A- 4 148 855**

(73) Patentinhaber: **BAYER AG,
D-5090 Leverkusen 1 Bayerwerk(DE)**

(72) Erfinder: **Busch, Ralf, Dr., Andreas-Gryphius-Strasse 5,
D-5000 Koeln 80(DE)**
Erfinder: **Schoberth, Winfried, Dr.,
Gustav-Freytag-Strasse 7, D-5090 Leverkusen 1(DE)**
Erfinder: **Rasshofer, Werner, Dr.,
Leopold-Gmelin-Strasse 31, D-5000 Koeln 80(DE)**

**Beschreibung**

Die Erfindung betrifft ein Verfahren zum Herstellen von Formteilen, insbesondere Polstern, aus mindestens zwei Schaumstoffe, insbesondere Polyurethan-Schaumstoffe, unterschiedlicher Elastizität bzw. Härte bildenden, fließfähigen Reaktionsgemischen, wobei in einen Formhohlraum ein erstes und zumindest ein zweites Reaktionsgemisch eingebracht werden und zu einem Formteil mit Zonen unterschiedlicher Elastizität bzw. Härte ausreagieren gelassen werden, bevor das Formteil entformt wird; und Anwendung dieses Verfahrens für die Herstellung von Fahrzeugsitzpolstern mit seitlichen Wangen.

Die Herstellung von Formteilen, insbesondere Polstern, durch Formverschäumung findet gegenüber dem früher gebräuchlichen Zuschneideverfahren immer mehr Verbreitung, weil es rationell und nahezu verlustfrei durchführbar ist. Dabei werden die Polster entweder hinterher mit einem Textilüberzug versehen oder ein in ein Tiefziehformwerkzeug eingelegter Bezug wird direkt hinterschäumt.

Für die Herstellung von Formteilen mit Zonen unterschiedlicher Härte wurden schon die verschiedensten Verfahren vorgeschlagen:

dem eingangs genannten, aus EP-A1 0 068 820 bekannten Verfahren gemäss wird ein zweites Schaumgemisch direkt auf ein erstes Schaumgemisch zu einer Zeit entsprechend einer Volumenexpansion des ersten Gemisches von +100 % bis +2.300 % eingebracht, so daß eine oder mehrere relativ harte Zone(n) innerhalb eines relativ weichen Schaumes gebildet werden. Bei dieser Verfahrensweise bedarf es des Abwartens bis das erste Reaktionsgemisch die erforderliche Volumenausdehnung erreicht hat, bevor das zweite Reaktionsgemisch aufgegeben werden kann. Dadurch verlängern sich die Zykluszeiten bei der Formverschäumung in unerwünschter Weise. Zudem ist das eigentliche Ziel, nämlich härtere Zonen mit einer Schicht weichen Schaumstoffes zum Erhöhen des Sitzkomforts zu umhüllen, kaum erreichbar, weil die Ausdehnung der weichen Schicht in gewissen Zonen nur auf kleine Dicken beschränkt bleibt, welche die angestrebten Eigenschaften nur in unzureichender Weise vermitteln. Außerdem treten auch noch Schwierigkeiten hinsichtlich einer ausreichenden Reproduzierbarkeit dieser Umhüllungen auf.

Gemäß einem anderen Verfahren (US-A-4 190 697) wird zuerst eine härteren Schaum bildende Mischung in die Form eingebracht, wobei diese erste Mischung anschäumen gelassen wird und eine zweite, weicheren Schaum bildende Mischung eingebracht wird, nachdem die erste Mischung 10 bis 80 % ihres vollen Aufschäumvolumens erreicht hat, beim Einbringen die erste Mischung durchdringt und diese zum Aufschwemmen bringt, wonach beide Mischungen ausreagieren und einen Polyurethan-Schaumstoffartikel mit Zonen unterschiedlicher Dichte bilden.

Bei diesem Verfahren ist von Nachteil, daß das Durchdringen und Unterfließen des zuerst eingebrachten Reaktionsgemisches unregelmäßig erfolgt, so daß keine Formteile, insbesondere hinsichtlich der Eindruckhärte, mit ausreichend reproduzierbaren Eigenschaften herstellbar sind.

Es besteht die Aufgabe, ein Verfahren der eingangs gegannten Art zur Verfügung zu stellen, welches kürzere Zykluszeiten bei guter Reproduzierbarkeit in der Ausbildung der Zonen unterschiedlicher Härte bzw. Elastizität ermöglicht.

Gelöst wird diese Aufgabe dadurch, daß das zweite Reaktionsgemisch beim Einbringen so weit ancremen gelassen wird, daß es zum Zeitpunkt der Berührung mit dem ersten Reaktionsgemisch bereits eine niedrigere Dichte aufweist, als das erste Reaktionsgemisch, wobei das zweite bzw. weitere Reaktionsgemisch(e) auf und/oder neben die vom ersten bzw. weiteren Reaktionsgemisch(en) gebildete(n) Schicht(en) aufgegeben wird.

Dadurch wird erreicht, daß man als erstes Reaktionsgemisch eine beliebige Rezeptur verwenden kann, wodurch sich neue Anwendungsmöglichkeiten ergeben, weil durch das Einbringen des zweiten oder der weiteren Reaktionsgemische(s) mit entsprechend niedrigerer Dichte der Verfahrensablauf vom Zustand des ersten Reaktionsgemisches im Augenblick der Berührung durch das zweite in weiten Grenzen unabhängig gemacht wird. Die sahnige Konsistenz bewirkt auch, daß bei der Berührung des ersten Gemisches durch Überströmen von der Seite her oder durch direktes Aufbringen auf die Schicht des ersten Gemisches keine Verwirbelungen entstehen, sofern die Aufprallwucht nicht zu groß ist. D.h. der Eintragsvorgang ist dementsprechend vorsichtig durchzuführen. Andererseits gewähren auch die heute gebräuchlichen Mischaggregate ausreichend niedrige Auslaufgeschwindigkeiten, um Verwirbelungen der verschiedenen Reaktionsgemische zu vermeiden. Bei der Aufgabe eines dritten oder weiterer Reaktionsgemische(s) ist dieses dritte bzw. die weiteren bezüglich ihres Cremezustandes so abzustimmen, daß er zum Zeitpunkt der Berührung mit einem der anderen Reaktionsgemische der Forderung nach niedrigerer Dichte entspricht.

Das zweite oder weitere Reaktionsgemisch(e) können je nach Erfordernis gleichzeitig oder zeitversetzt zum Eintrag des ersten oder eines weiteren Reaktionsgemisches erfolgen. Gleichzeitiges Einbringen bietet sich insbesondere dann an, wenn man die verschiedenen Gemische in verschiedene Bereiche eingibt. Dabei ist es durchaus möglich, zwei beispielsweise durch einen dritten Bereich getrennte Bereiche mit dem gleichen Reaktionsgemisch zu beschicken, während der dazwischen liegende Bereich mit einem anderen beschickt wird. Möchte man ein weiteres Reaktionsgemisch auf ein erstes direkt aufgeben, so ist es zweckmäßig, dies entsprechend zeitversetzt zu tun, damit das zuvor eingebrachte Gemisch sich bereits weitgehend über den vorgesehenen Bereich ausgebreitet hat.

An welchen Stellen und zu welcher Zeit oder ob gegebenenfalls gleichzeitig man das weichere oder das härtere schaumstoffbildende Reaktionsgemisch zuerst einbringt, hängt von verschiedenen Faktoren ab, im wesentlichen jedoch davon, an welchen Stellen im Formhohlraum sich die entsprechenden Zonen unterschiedlicher Härte ausbilden sollen.

Insbesondere ermöglicht es das neue Verfahren, harte Zonen einseitig bis allseitig mit Schichten beliebiger Stärke aus weichem Schaumstoff umkleidet, oder umgekehrt, zu erhalten. Da das zweite Reaktionsgemisch durch seinen Cremezustand bei Verwendung entsprechender Aktivatoren seinen maximalen Aufschäumgrad eher erreicht haben kann als das erste Reaktionsgemisch, ist es je nach diesem Aufschäumgrad möglich, daß das noch relativ flüssige erste Reaktionsgemisch seitlich mindestens bis zu einem gewissen Niveau hochgedrückt wird oder den durch das zweite Reaktionsgemisch gebildeten Schaum sogar ganz umhüllt. Eine solche teilweise oder völlige Umhüllung in gewünschter Stärke läßt sich durch Versuche durchaus ermitteln; sie hängt im wesentlichen von der Geometrie des Formteils bzw. des Formhohlraumes sowie den Mengenverhältnissen ab.

Als Rohstoffe zur Herstellung entsprechender Formteile kommen insbesondere alle hierfür gängigen Polyurethan-Schaumstoffsysteme infrage (vgl. auch Kunststoff-Handbuch, Band VII, "Polyurethane", herausgegeben von Vieweg und Höchtlen, Carl-Hanser-Verlag München 1966, insbesondere Seiten 440 bis 503 und 569 bis 571), wobei die Härteunterschiede der einzelnen Reaktionsgemische über Kennzahlvariation und/oder die Rezepturen einstellbar sind, wie über Füllstoffgehalt, Vernetzervariation, Rohdichteverhältnis usw. Das schnelle Ancremen des zweiten Gemisches wird erreicht, indem man dieser Formulierung Additive zusetzt, die beim Vermischen der Komponenten spontan $CO_2$ oder eine andere unter den Reaktionsbedingungen gasförmige Verbindung abspalten. Bevorzugt kommen die in EP-A-121 850 beschriebenen Amin-Koh lendioxid-Addukte zum Einsatz. Es läßt sich aber auch ein Froth-Schaum herstellen oder man kann durch hohe Aktivierung das Ancremen bewirken. Das Ancremen läßt sich auch durch Beladung einer Reaktionskomponente mit Gas, insbesondere Inertgas, wie $CO_2$ oder $N_2$, erreichen bzw. beschleunigen. Die Gasbeladung erfolgt dabei bei verschiedenen Gasdrücken durch einen Lösungsvorgang und/oder einen Dispersionsvorgang. Eine weitere Möglichkeit besteht darin, daß man das zweite Reaktionsgemisch entsprechend früh vorbereitet, d.h. verzögert einbringt, damit es zum Zeitpunkt der Berührung mit dem ersten Gemisch bereits die notwendige niedrigere Dichte erreicht hat. In diesem Sinne läßt sich das zweite Reaktionsgemisch sogar früher herstellen als das erste, damit es beispielsweise gleichzeitig oder sofort nach dem Ausbreiten des ersten Gemisches zu einer Schicht eingegeben werden kann.

Besonders geeignet ist die Anwendung des neuen Verfahrens für die Herstellung von Fahrzeugsitzpolstern mit seitlichen Wangen. Bei dieser Anwendung ist das Neue darin zu sehen, daß ein erstes schaumstoffbildendes Reaktionsgemisch in die den Wangen entsprechenden Bereiche des Formhohlraumes sowie auf den der Sitzfläche entsprechenden Bereich gegossen wird und zumindest ein zweites schaumstoffbildendes, in seiner Expansion soweit fortgeschrittenes Reaktionsgemisch eingebracht wird, daß es bei der Berührung mit den in den den Wangen entsprechenden Bereichen und/oder im Bereich der Sitzfläche befindlichen Schichten des ersten Reaktionsgemisches bereits eine niedrigere Dichte aufweist als das erste Reaktionsgemisch, so daß es bestenfalls einsinkt, aber die erste Schicht nicht durchdringt.

Auf diese Weise lassen sich sowohl Sitzpolster ohne Bezug als auch solche mit hinterschäumten Bezügen herstellen. Durch die Verwendung mehrerer Mischköpfe zum Herstellen eines gleichen oder verschiedener Reaktionsgemisch(s) läßt sich das neue Verfahren in seiner Anwendung weitestgehend variieren.

Das neue Verfahren ist in einem Durchführungsbeispiel in seiner Anwendung zur Herstellung eines Sitzpolsters für Fahrzeugsitze mit Hilfe einer Zeichnung erörtert.

Es zeigen:

Fig. 1 und 2 die Herstellung des in Fig. 3 dargestellten Sitzpolsters,
Fig. 3 das hergestellte Sitzpolster,
Fig. 4 bis 10 weitere, nach dem neuen Verfahren herstellbare Ausführungsformen von Sitzpolstern mit Wangen, und
Fig. 11 ein Sitzpolster im Längsschnitt mit Schaumstoffzonen von drei unterschiedlichen Härten.

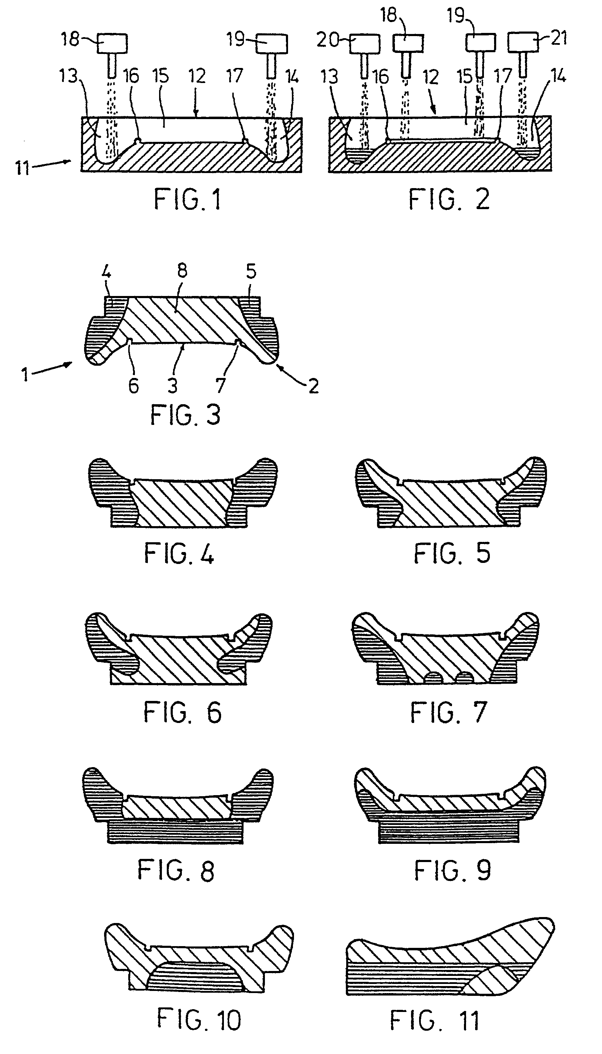

Es soll ein Sitzpolster gemäß Fig. 3 gefertigt werden, welches Wangen 1, 2 und einen dazwischen angeordneten Sitzflächenabschnitt 3 besitzt. Die äußeren Zonen 4, 5 der Wangen bestehen aus einem härteren Schaumstoff mit einer Dichte von 50 kg/dm³ und einer Stauch-Härte nach DIN 53577 von 7,3 kPa. Der Sitzflächenabschnitt 3 ist durch Rillen 6, 7 gegenüber den Wangen 1, 2 abgegrenzt. Eine Zone 8 weicheren Schaumstoffes mit einer Dichte von 50 kg/dm³ und einer Stauch-Härte von 3,3 kPa. erstreckt sich über den Sitzflächenabschnitt 3 über die Rillen 6, 7 hinweg bis in die Wangen 1, 2 und bildet mit den Zonen 4, 5 eine feste, jedoch scharf abgegrenzte Verbindung. Das Gesamtvolumen des Sitzpolsters beträgt 32 dm³ , davon ist der Anteil an weicherem Schaumstoff, welcher der Zone 8 entspricht, 25 dm³ .

Die Herstellung erfolgt gemäß Fig. 1 und 2, wobei das angedeutete Formwerkzeug 11 einen Formhohlraum 12 aufweist, welcher das Sitzpolster kopfstehend abbildet, wie es auch in Fig. 3 dargestellt ist. Den Wangen 1, 2 entsprechen die Bereiche 13, 14, dem Sitzflächenabschnitt 3 der Bereich 15 und den Rillen 6, 7 des Sitzpolsters die Stege 16, 17. Mit zwei Mischköpfen 18, 19 (Fig. 1) wird das den weicheren Schaumstoff bildende Reaktionsgemisch jeweils in einer Menge von 180 g in jede der beiden Wangenbereiche 13, 14 eingetragen. Anschließend (Fig. 2) werden die Mischköpfe 18, 19 über den Sitzflächenbereich 15 plaziert und dort das gleiche Reaktionsgemisch in einer Menge von 1150 g aufgegeben. Die Stege 16, 17 verhindern das Abfließen in die Wangenbereiche 13, 14. Mittels zweier Mischköpfe 20, 21 wird gleichseitig mit der Beschickung des Sitzflächenbereiches 15 durch die Mischköpfe 18, 19 das den härteren Schaumstoff bildende Reaktionsgemisch auf das bereits in den Wangenbereichen 14 befindliche erste Reaktionsgemisch aufgegeben. Die Dichte des ersten Reaktionsgemisches beträgt im Augenblick der Berührung mit dem zweiten Reaktionsgemisch 0,8 kg/dm³ , während das zweite Reaktionsgemisch in einem solchen angecremten Zustand aufgegeben wird, daß es im Augenblick der Berührung mit dem ersten Reaktionsgemisch eine Dichte von 0,3 kg/dm³ aufweist. Die Zeitverzögerung zwischen dem Beginn des Eintragens des ersten Reaktionsgemisches und des Kontaktes durch das zweite beträgt 7 sec. Nach dem Verschließen des Formwerkzeuges 11 schäumen die Reaktionsgemische vollständig zu dem in Fig. 3 dargestellten Sitzpolster auf.

Das erste, den weicheren Schaumstoff bildende Reaktionsgemisch besitzt folgende Rezeptur:

Komponente A

100 Gew.- Teile Polyether, erhalten durch Addition von Propylenoxid und anschließend Ethylenoxid an Trimethylolpropan mit einer Funktionalität 3 und einem primären OH-Gehalt von ca. 80 Gew.-% bei einer OH-Zahl von ca. 30;
3,1 Gew.-Teile Wasser;
0,2 Gew.-Teile Bis-Dimethylaminoethylether;
0,4 Gew.-Teile handelsüblicher Schaumstabilisator, bestehend aus einer Mischung niedermolekularer Siloxane (Stabilisator KS 43 der Bayer AG Leverkusen, BRD);
0,8 Gew.-Teile Triethylendiamin (33 %ig in Dipropylenglykol).

Komponente B

45,3 Gew.-Teile eines Isocyanates der Kennzahl 85 mit ca. 65 Gew.-% 4,4'-Diphenylmethan-diisocyanat und ca. 20 Gew.-% 2,4'-Diphenylmethandiisocyanat und ca. 15 Gew.-% polymerem MDI bei einem NCO-Gehalt von ca. 32,5 %.
Das zweite, den härteren Schaumstoff bildende Reaktionsgemisch besitzt folgende Rezeptur:

Komponente A

100 Gew.-Teile Polyether, erhalten durch Addition von Propylenoxid und anschließend Ethylenoxid an Trimethylolpropan mit einer Funktionalität 3 und einem primären OH-Gehalt von ca. 80 Gew.-% bei einer OH-Zahl von ca. 30;
3,1 Gew.-Teile Wasser;
0,2 Gew.-Teile Bis-Dimethylaminoethylether;
0,4 Gew.-Teile handelsüblicher Schaumstabilisator, bestehend aus einer Mischung niedermolekularer Siloxane (Stabilisator KS 43 der Bayer AG Leverkusen, BRD);
0,8 Gew.-Teile Triethylendiamin (33 %ig in Dipropylenglykol);
4,0 Gew.-Teile des Adduktes von $CO_2$ an N-Methylethanolamin.

Komponente B

70,6 Gew.-Teile eines Isocyanates der Kennzahl 110 mit ca. 65 Gew.-% 4,4'-Diphenylmethan-diisocyanat und ca. 20 Gew.-% 2,4'-Diphenylmethandiisocyanat und ca. 15 Gew.-% polymerem MDI bei einem NCO-Gehalt von ca. 32,5 %.

In den in Fig. 4 bis 10 dargestellten, weiteren mittels des neuen Verfahrens hergestellten Ausführungsformen von Sitzpolstern (in Normalposition im Schnitt dargestellt) sind die Zonen weicheren Schaumstoffes grob schraffiert, während die Zonen härteren Schaumstoffes eine enge Schraffur aufweisen.

In Fig. 11 besteht die Sitzfläche aus einem Schaumstoff mittlerer Härte, und im Kniekehlenbereich, jedoch an der Unterseite des Sitzpolsters befindet sich eine sehr weiche Zone; die dritte Zone weist die größte Härte auf.

Zu beachten sind die verschiedenen Ausführungsformen der seitlichen Wangen sowie die Unterfütterung von Sitzflächenabschnitten sowie Kombinationen davon.

**Patentansprüche**

1. Verfahren zum Herstellen von Formteilen, insbesondere Polstern, aus mindestens zwei Schaumstoffe, insbesondere Polyurethan-Schaumstoffe, unterschiedlicher Elastizität bzw. Härte bildenden, fließfähigen Reaktionsgemischen, wobei in einen Formhohlraum (12) ein erstes und zumindest ein zweites Reaktionsgemisch eingebracht werden und zu einem Formteil mit Zonen (4, 5, 8) unterschiedlicher Elastizität bzw. Härte ausreagieren gelassen werden, bevor das Formteil entformt wird, dadurch gekennzeichnet, daß das zweite Reaktionsgemisch beim Einbringen so weit ancremen gelassen wird, daß es zum Zeitpunkt der Berührung mit dem ersten Reaktionsgemisch bereits eine niedrigere Dichte aufweist als das erste Reaktionsgemisch, wobei das zweite bzw. weitere Reaktionsgemisch(e) auf und/oder neben die vom ersten bzw. von weiteren Reaktionsgemisch(en) gebildete(n) Schicht(en) aufgegeben wird (werden).

2. Verfahren nach Anspruch 1, dadurch gekennzeichnet, daß das zweite bzw. weitere Reaktionsgemisch(e) gleichzeitig mit dem ersten Reaktionsgemisch eingebracht wird (werden).

3. Anwendung des Verfahrens nach Anspruch 1 oder 2 für die Herstellung von Fahrzeugsitzpolstern mit seitlichen Wangen (1, 2), dadurch gekennzeichnet, daß ein erstes Reaktionsgemisch in die den Wangen (1, 2) entsprechenden Bereiche (13, 14) des Formhohlraumes (12) sowie auf den der Sitzfläche (3) entsprechenden Bereich (15) gegossen wird und zumindest ein zweites, in seiner Expansion so weit fortgeschrittenes Reaktionsgemisch auf die in den den Wangen (1, 2) entsprechenden Bereiche (13, 14) und/oder im Bereich (15) der Sitzfläche (3) befindlichen Schichten des ersten Reaktionsgemisches aufgegeben wird, daß es bereits zum Zeitpunkt der Berührung mit dem ersten Reaktionsgemisch eine niedrigere Dichte aufweist als das erste Reaktionsgemisch.

## Claims

1. A process for the production of mouldings, especially cushions, from at least two foams, especially polyurethane foams forming fluid reaction mixtures of different elasticity or hardness, wherein a first and at least a second reaction mixture are introduced into a mould cavity and are left to react out to form a moulding having zones (4, 5, 8) of different elasticity or hardness before the moulding is removed from the mould, characterised in that, when introduced into the mould, the second reaction mixture is allowed to cream up to such an extent that it already has a lower density than the first reaction mixture at the time of contact, wherein the second or further reaction mixture(s) is (are) introduced onto and/or next to the layer(s) formed by the first or further reaction mixture(s).

2. Process according to claim 1, characterised in that the second or further reaction mixture(s) is (are) introduced at the same time as the first reaction mixture.

3. Use of the process according to claim 1 or 2 for the production of vehicle seat cushions having side webs (1, 2), characterised in that a first reaction mixture is cast into the regions (13, 14) corresponding to the side webs (1, 2) of the mould (12) as well as into the region (15) corresponding to the seat area (3) and that at least a second reaction mixture is introduced onto the layers of the first reaction mixture present in the regions (13, 14) corresponding to the side webs (1, 2) and/or in the region (15) of the seat area, being so advanced in its expansion that it has a lower density than the first reaction mixture by the time it comes into contact therewith.

## Revendications

1. Procédé de fabrication de pièces moulées, en particulier de coussins, au départ de mélanges réactionnels fluides formant au moins deux mousses, en particulier des mousses de polyuréthane d'élasticité et/ou de dureté différente, un premier et au moins un second mélange réactionnel étant mis en place dans une cavité de moulage (12) et en laissant réagir le tout pour former une pièce moulée avec zones (4, 5, 8) d'élasticité et/ou de dureté différente avant le démoulage de la pièce moulée, caractérisé en ce qu'on laisse se fixer le second mélange réactionnel, lors de sa mise en place, de manière à ce qu'il présente, au moment du contact avec le premier mélange réactionnel, déjà une densité inférieure à celle du premier mélange réactionnel, le second mélange réactionnel ou tous éventuels mélanges réactionnels supplémentaires étant appliqué(s) sur les couches formées par le premier mélange réactionnel ou par les mélanges réactionnels supplémentaires et/ou à côté de celles-ci.

2. Procédé selon la revendication 1, caractérisé en ce que le seond mélange réactionnel ou d'éventuels mélanges réactionnels supplémentaires sont mis en place simultanément avec le premier mélange réactionnel.

3. Utilisation du procédé selon la revendication 1 ou 2 pour la fabrication de coussins pour sièges de véhicules avec rembourrages latéraux (1, 2), caractérisée en ce qu'un premier mélange réactionnel est coulé dans les zones (13, 14) de la cavité de moulage (12) correspondant aux rembourrages latéraux (1, 2) ainsi que dans la zone (15) correspondant à l'assise (3) et en ce qu'au moins un second mélange réactionnel est appliqué sur les couches du premier mélange réactionnel situées dans les zones (13, 14) correspondant aux rembourrages latéraux (1, 2) et/ou dans la zone (15) correspondant à l'assise (3), ledit second mélange étant avancé dans son expansion au point que, dès le contact avec le premier mélange réactionnel, il présente une densité inférieure à celle du premier mélange réactionnel.

FIG. 1

FIG. 2

FIG. 3

FIG. 4

FIG. 5

FIG. 6

FIG. 7

FIG. 8

FIG. 9

FIG. 10

FIG. 11